Europäisches Patentamt

European Patent Office

Office européen des brevets

(11) Publication number: **0 035 372**
A2

# EUROPEAN PATENT APPLICATION

(21) Application number: **81300799.4**

(22) Date of filing: **26.02.81**

(51) Int. Cl.³: **B 62 K 21/12**, B 62 K 21/26

(30) Priority: **03.03.80 JP 27976/80 U**

(43) Date of publication of application: **09.09.81**
**Bulletin 81/36**

(84) Designated Contracting States: **BE DE FR GB IT**

(71) Applicant: **SHIMANO INDUSTRIAL COMPANY LIMITED, 77, 3-cho Oimatsu-cho Sakai-shi, Osaka (JP)**

(72) Inventor: **Shimano, Keizo, 81, 3-cho, Midorigaoka-Minamimachi Sakai-shi, Osaka (JP)**

(74) Representative: **Szczuka, Jan Tymoteusz et al, Cruikshank & Fairweather 19 Royal Exchange Square, Glasgow G1 3AE Scotland (GB)**

(54) **Cycle handlebars.**

(57) This invention relates to a pair of cycle handlebars for mounting on a handlebar stem (A) of a cycle, which pair of handlebars comprises a central portion (1) provided with a mounting portion (11) for mounting, in use of said pair of handlebars, on said handlebar stem (A); gripping portions (2) extending from and in continuation of both ends of said central portion; and bracket members (3) supporting brake control levers (4). Known such handlebars are difficult to grip safely with efficient steering and braking control in different rider body positions.

According to this invention the gripping portions (2) are cranked relative to the central portion (1) so as to be inclined, at least at their distal ends, when mounted on said handlebar stem (A), generally forwardly and upwardly of the central portion (1), and in that said bracket members (3) are formed and arranged for supporting the brake control levers (4) so that the latter extend generally alongside said gripping portions.

## CYCLE HANDLEBARS

This invention relates to a pair of cycle handlebars for mounting on a handlebar stem of a cycle, which pair of handlebars comprises a central portion provided with a mounting portion for mounting, in use of said pair of handlebars, on said handlebar stem; gripping portions extending from and in continuation of both ends of said central portion; and bracket members supporting brake control levers.

Previously known cycle handlebars have various shapes but can generally be classified as flat, drop or upright type handlebars.

The flat type handlebars has its grip portions level with a central mounting portion of the handlebars used for securing the handlebars to a handlebar stem, the drop type handlebars has them lower than the mounting portion, and the upright type handlebars has them above the mounting portion.

When riding the cycle at high speed or on an uphill slope, a rider usually grips the handlebars whilst inclining his body forwards to minimize air resistance and pedals with all his strength. When riding at low speed, he tends to raise his body so as not to tire his shoulders or arms.

When a rider steering a cycle whilst gripping a conventional flat type handlebars wishes to incline his body forwards for high speed riding, he needs to shift his buttocks rearwardly on the saddle, because it is not possible to adopt such a posture simply by changing the gripping position of his hands. In such a riding position, he is however liable to lose his balance. Hence, the flat type handlebars generally obliges the rider to maintain a generally upright posture even whilst cycling at high speed.

The drop type handlebars can be gripped by the

rider at first straight portions, at the front ends of bent (cranked or arcuate) portions extending forwardly therefrom, or at second straight portions extending rearwardly from the bent portions, so that he can ride the cycle in different postures to suit different speeds etc. However, it is relatively difficult for the rider, if he is unskilled, to steer the cycle whilst gripping the bent portions or the second straight portions, and even if the rider is skilled, he generally tends to grip the bent portions whilst supporting his hands on bracket members which mount the brake levers, which means that his palms do not properly grip the gripping portions. As a result, he becomes fatigued after riding the cycle for only a short time.

The upright type of handlebars having uppermost gripping portions makes it difficult for the rider to steer the cycle whilst in a forwardly inclined posture. If he forcibly adopts such a posture for high speed riding, his handling becomes rather more unstable than with use of a flat type handlebars.

The abovementioned bracket members, which are in practice used as supports for the driver's hands when gripping the bent portions of the drop type handlebars, project upwardly with respect to the bent portions. The brake control levers are usually supported on the bracket members in a position for easy operation by the rider's hands when he is gripping the second straight portions, so that when the rider is gripping the bent portions, he has to remove his hands therefrom to enable him to operate the brake levers. As a result, braking is relatively difficult and the braking action delayed.

It is an object of the present invention to avoid or minimize one or more of the above disadvantages and in particular to provide a cycle handlebars which is easy to manipulate and enables the driver to adopt a stable inclined posture during riding of the cycle at high speed so even an unskilled rider can ride in comparative safety, and be able to operate the brake control levers.

The present invention provides a pair of cycle handlebars for a mounting on a handlebar stem of a cycle, which pair of handlebars comprises a central portion provided with a mounting portion for mounting, in use of said pair of handlebars, on said handlebar stem;  gripping portions extending from and in continuation of both ends of said central portion;  and bracket members supporting brake control levers, characterized in that said gripping portions are cranked relative to the central portion so as to be inclined, at least at their distal ends, when mounted on said handlebar stem, generally forwardly·and upwardly of the central portion, and in that said bracket members are formed and arranged for supporting the brake control levers so that the latter extend generally alongside said gripping portions.

The gripping portions of the handlebar of the invention are cranked forwardly and upwardly from the central portion, so that the rider can naturally incline his body forward in a stable condition when gripping the gripping portions, thereby enabling him to steer the cycle in comparative safety without the need for any special skill.

Furthermore, the brake control levers provided at the bracket members and extending alongside the gripping portions facilitate operation of the brake levers by the rider.  Thus, the handlebars of the invention provide improved steering control and safety and facilitate braking, thereby enabling easier control of a cycle even by unskilled riders.

Further preferred features and advantages of the invention will appear from the following description given by way of example of two preferred embodiments illustrated with reference to the accompanying drawings in which:

Fig. 1 is a perspective view of a first embodiment of a pair of handlebars of the invention;

Fig. 2 is a partially cutaway, enlarged scale, side view of the embodiment of Fig. 1;

Fig. 3 is a partially cutaway, enlarged scale, side view of a second embodiment of the invention; and

Fig. 4 is a perspective view of an actuator only of the embodiment of Fig. 3.

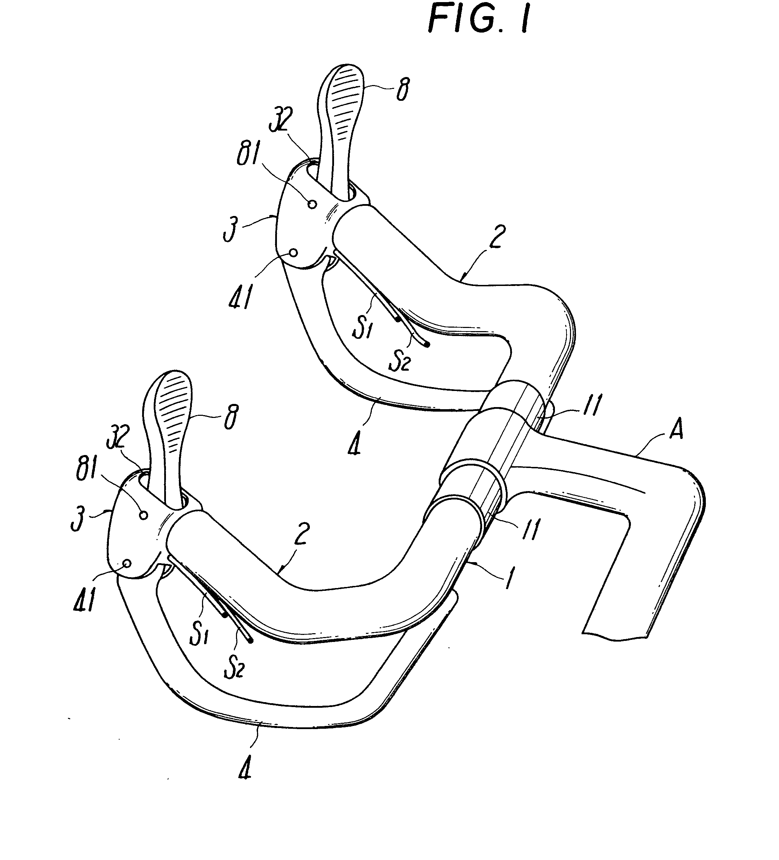

Fig. 1 shows a pair of handlebars mounted via a horizontally extending central portion 1 provided with a mounting portion 11, in a handlebar stem A of a cycle (not shown). Respective gripping portions 2 extend forwardly from both ends of the central portion 1. The gripping portions 2 extend generally upwardly away from the mounting portion 11 in the forward direction of the cycle and have their distal ends disposed above (though spaced horizontally from) the mounting portion 11 so as to bend halfway at a given angle. In general the central portion 1 and gripping portions 2 are formed of a light alloy tubular material.

Bracket members 3 are provided at the distal ends of the gripping portions 2 and carry brake control levers 4 extending generally alongside the gripping portions 2.

The bracket members 3 are formed separately from the central portion 1 and gripping portions 2, and are secured to the distal ends of the respective gripping portions 2 with the aid of fixing means to be hereinafter described.

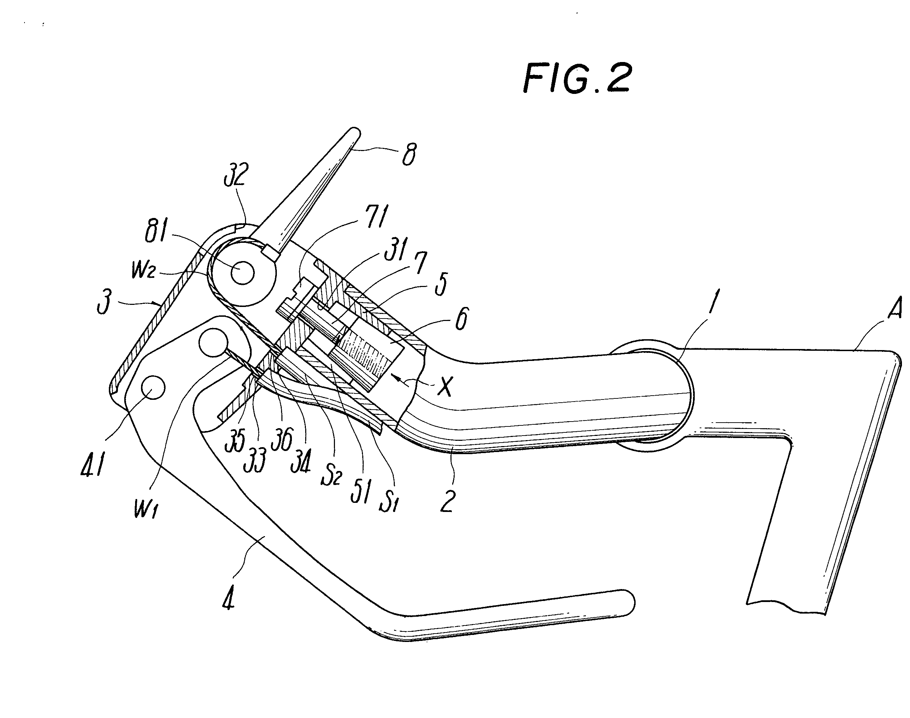

Each fixing means, as shown in Fig. 2, comprises; a tubular clamp portion 5 formed integrally with a respective bracket member 3 and having a plurality of axially extending slits 51, an external diameter equal to or slightly smaller than the internal diameter of the distal end of the gripping portion 2, and a frustoconical internal surface tapering inwardly away from the free end of the clamp portion 5. An actuator 6 is movable axially inside the clamp portion 5 so as to radially expand the clamp portion 5; and a screw threaded drive member 7 is screw-threadedly engaged with the actuator 6 and mounted in the bracket member 3 with its head 71 rotatable relative to said bracket member 3 for drawing the actuator 6 into the clamp portion 5 to expand the latter so that the latter grips the interior of the distal end of the tubular gripping portion 2 tightly and securely against withdrawal from the latter.

The actuator 6 is generally frustoconical in shape, and has a central longitudinally extending threaded bore in which the screw threaded drive member 7 engages. The shank of the screw threaded member 7 extends through an aperture 31 in a wall portion of the bracket member 3 from which the clamp portion 5 extends.

The bracket members 3 are secured to the respective distal ends of the gripping portions 2 by means of the above described fixing means 5,6,7 in such a manner that, in each case, the clamp portion 5, as shown in Fig. 2, locates within the distal end of the gripping portion 2 and a tool, such as a screwdriver, is then used to rotate the screw member 7, so that the actuator 6 is drawn axially into the clamp portion in the direction of the arrow $\underline{X}$ to radially expand the clamp 5, thereby pressing the outer surface of the clamp portion 5 against the inner surface of said respective distal end of a said gripping portion 2.

The brake control levers 4 are pivotally mounted, with the aid of pivot pins 41, in downwardly projecting portions of the bracket members 3 so that said levers 4 extend alongside the gripping portion 2 and preferably alongside the central portion 1 also, in which case the levers 4 are generally L-shaped when viewed in plan. This type of construction facilitates braking by the rider without the need for changing his gripping position when he is riding the cycle whilst gripping the central portion 1 of the handlebars.

Figs. 1 and 2 also show gear control levers 8 for use in changing the cycle speed, also supported on the bracket members 3 via respective pivot pins 81.

The gear control levers 8 extend upwardly from the bracket members 3 through apertures 32 formed in the upper sides of the bracket members 3, so that the rider can easily operate the gear levers 8 with the forefingers of his hands whilst gripping the gripping portions 2.

When the cycle is equipped with both front and rear derailleurs, two gear control levers 8 are conveniently provided on respective ones of the bracket members 3, but when only a rear derailleur is fitted, there need of course only be provided one gear lever 8 on one of the bracket members 3. When no gear levers 8 are required, the apertures 32 are conveniently closed with suitable plugs or caps.

The above described brake operating levers 4 and gear control levers 8 are connected to the brakes and derailleurs by respective control wires $\underline{W}_1$ and $\underline{W}_2$, and bracket members 3 mounting outer sheaths $\underline{S}_1$ and $\underline{S}_2$ for the respective control wires $\underline{W}_1$ and $\underline{W}_2$.

As may be seen in Figs. 1 and 2, each bracket member 3 is provided in the wall portion from which the clamp portion 5 projects but spaced laterally away therefrom with support bores 33 and 34 for the outer sheaths $\underline{S}_1$ and $\underline{S}_2$, and through-bores 35 and 36 for the control wires $\underline{W}_1$ and $\underline{W}_2$, so that the control wires $\underline{W}_1$ and $\underline{W}_2$ and outer sheaths $\underline{S}_1$ and $\underline{S}_2$, are lead out of the bracket member 3 to extend alongside the gripping, and possibly also central, portions 2 of the handlebars.

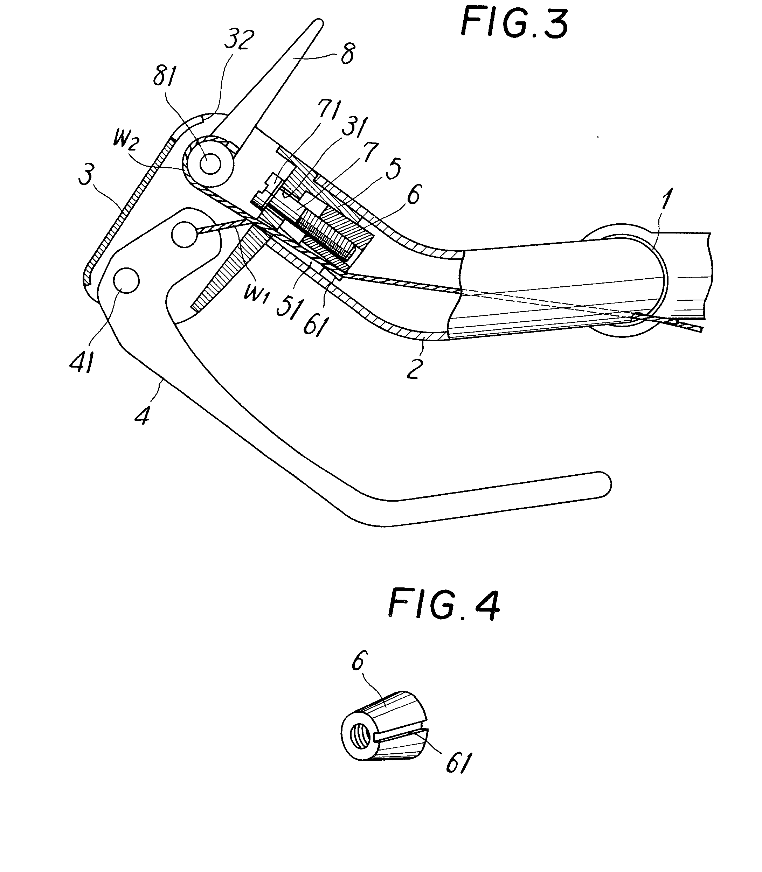

Alternatively, the wires $\underline{W}_1$ and $\underline{W}_2$, as shown in Fig. 3, may be led through the interior of each of the respective bracket members 3, gripping portions 2 and central portion 1. In this case, the control wires $\underline{W}_1$ and $\underline{W}_2$, as shown in Figs. 3 and 4, may be led through an axially extending groove or grooves 61 provided in the outer peripheral surface of each actuator 6 and/or the axially extending slits of the clamp portions 5, and suitably aligned bores in said walls of the bracket members 3 from which the clamp portions 5 extend.  Alternatively they could be led through bores (not shown) in the actuator 6 or through axial bores (not shown) provided in each screw threaded drive member 7.

The rider when riding a cycle equipped with the handlebars of the invention at low speed, e.g. 20 km/h or less, grips the central portion 1 while his body is in a raised or upright position, whilst when riding at high speed, e.g. over 20 km/h, he can grip the gripping portions 2 while inclining his body forward to reduce air resistance.

Although in the forwardly inclined position the rider supports an appreciable proportion of his weight through his arms and hands, there is no danger of his hands slipping from the gripping portions 2 which are directed forwardly and upwardly.  Hence, he is able to keep his body well-balanced whilst steering the cycle.

The brake levers 4 are disposed alongside the gripping portions 2 and central portion 1 at a generally constant spacing therefrom, so that whatever the position of his hands on the gripping portions 2 and central portion 1 the rider can immediately operate the brake levers 4.

As will be apparent from the above, a pair of handlebars of the invention enables the rider not only to adopt different postures suitable for different riding conditions, but also to keep his body well-balanced even when he is inclining his body forwards, thereby improving the riders control of the cycle and his overall safety.  Thus less experienced riders such as children can more easily ride and control the cycle.  Furthermore, the rider can safely operate the brake levers with his hands whilst they are gripping the gripping portions.

## CLAIMS

1. A pair of cycle handlebars for mounting on a handlebar stem (A) of a cycle, which pair of handlebars comprises a central portion (1) provided with a mounting portion (11) for mounting, in use of said pair of handlebars, on said handlebar stem (A); gripping portions (2) extending from and in continuation of both ends of said central portion; and bracket members (3) supporting brake control levers (4), characterized in that said gripping portions (2) are cranked relative to the central portion (1) so as to be inclined, at least at their distal ends, when mounted on said handlebar stem (A), generally forwardly and upwardly of the central portion (1), and in that said bracket members (3) are formed and arranged for supporting the brake control levers (4) so that the latter extend generally alongside said gripping portions.

2. Handlebars according to Claim 1, wherein each said brake control lever (4) is formed so as to extend alongside both a respective gripping portion (2) and at least part of said central portion (1).

3. Handlebars according to Claim 1 or Claim 2 wherein said bracket members (3) also support one or more gear control levers.

4. Handlebars according to Claim 3, wherein said bracket members (3) project downwardly beyond the lower sides of the distal ends of said gripping portions (2), said bracket members (3) supporting (41) at their downwardly projecting portions the brake control levers (4) whilst supporting (81) said speed control levers (8) at their upper portions.

5. Handlebars according to any one of Claims 1 to 4 wherein said control levers (4,8) are connected to control wires $W_1$, $W_2$), which control wires $W_1$, $W_2$ are led through said gripping portions (2) and optionally said central portion (1).

6.    Handlebars according to any one of Claims 1 to 5 wherein the gripping and central portions (2,1) are formed as a single tubular member which is cranked at each end of the central portion (1) so that the gripping portions (2) extend in a generally similar direction to one side thereof.

7.    Handlebars according to Claim 6 wherein said tubular member (1,2) is generally U-shaped, the legs (2) of the U-shape being cranked intermediate their ends so that their distal ends extend in an inclined plane at an acute angle to the principal plane of said U-shape with an obtuse angle between the distal ends and respective inner ends of the legs.

8.    Handlebars according to any one of Claims 1 to 7 wherein the bracket members (3) have radially outwardly acting clamp portions (5) which locate in recesses in the distal ends of the gripping portions (2) and wherein frusto-conical actuators (6) are located in frusto-conical axially extending recesses in said clamp portions (5) and engaged with drive members (7) arranged for driving the actuators (6) into said recesses so as to radially expand said clamp portions (5).

FIG. 1

# FIG.2

2/3

# FIG.3

# FIG.4